# EUROPEAN PATENT SPECIFICATION

(11) **EP 1 902 847 B1**
(45) Date of publication and mention of the grant of the patent: **03.06.2009**
(21) Application number: 07017592.2
(22) Date of filing: 07.09.2007
(51) Int. Cl.: B41J 3/407

(54) **RFID-label issuing apparatus**
Vorrichtung zur Herstellung von RFID-Etiketten
Appareil d'émission d'étiquette RFID

(30) Priority: 22.09.2006 JP 2006257530
(43) Date of publication of application: 26.03.2008
(73) Proprietor: Toshiba TEC Kabushiki Kaisha, Tokyo 141-8664 (JP)
(72) Inventor: Sugiyama, Makoto, c/o Intellectual Property Division, Shinagawa-ku Tokyo 141-8664 (JP)
(74) Representative: Kramer - Barske - Schmidtchen

(56) References cited:
- WO-A-20/05022445
- WO-A-20/06060536
- DE-A1- 19 846 295
- US-A1- 2001 034 565
- US-A1- 2003 061 947

## Description

The present invention relates to an apparatus for issuing radio frequency identification labels (RFID labels).

In recent years, an attention has been paid to RFID labels, each comprising a label sticker and a radio frequency identification tag (RFID tag) embedded in the sticker and composed of an IC chip and an antenna. Data can be written into, and read from, RFID tags in non-contact fashion by means of radio communication. The RFID tags are therefore hardly be affected by stain or dust. In the field of physical distribution, for example, it is proposed that RFID tags be put on commodities so the distribution of the commodities may be managed.

To issue RFID labels, RFID-label issuing apparatuses are employed. Any RFID-label issuing apparatus uses RFID label sheets, each composed of a belt-shaped base and a plurality RFID labels bonded to the base and arranged thereon in a row. The RFID labels can be peeled off the sheet base.

The RFID-label issuing apparatus has a print head and an RFID reader-writer. The print head is located at the distal end of the transport path for RFID label sheets. The RFID reader-writer has an antenna. The antenna is positioned upstream of the transport path, with respect to the print head.

The RFID reader-writer communicates, via an antenna, with the RFID tags embedded in the RFID labels being transported one after another in the transport path, thereby writing data in the RFID tags. The print head prints visible data on the print surface of each RFID label. Thus, the RFID-label issuing apparatus can issue labels for use in management of commodities.

Not all RFID tags function correctly. That is, some of many RFID labels bonded to each RFID label sheet have radio output levels lower than the normal value.

Users can visually determine whether the data printed on any FRID label is correct or not. However, they cannot visually determine whether the data has been correctly written into the RFID tag embedded in the RFID label.

In view of this, an RFID-label issuing apparatus disclosed in Jpn. Pat. Appln. KOKAI Publication No. 2001-96814 is designed to print a special pattern on the print surface of an RFID label if the RFID reader-writer has failed to write data in the RFID tag. The special pattern is not print data of the ordinary type. Seeing the pattern, the user can determine that the RFID label is a defective one.

A similar apparatus is disclosed in US-A-2003/061947.

In any RFID-label issuing apparatus of this type, the antenna of the RFID reader-writer is attached very close to the conveyor surface of the transport path. Because When the antenna is spaced far from the conveyor surface, the apparatus will inevitably become too large to be put to practical use.

The antenna of the RFID reader-writer needs to write data into the RFID tag embedded in each RFID labels, without contacting the RFID label, while the RFID labels are moving one after another immediately above the antenna. This is why the antenna has high directivity with respect to the conveyor surface that lies immediately above the antenna. Having this antenna, the RFID-label issuing apparatus may write data even into defective RFID tags. Consequently, any RFID label having such a defective RFID tag will be issued as a normal label.

The present invention has been made in consideration of the foregoing. An object of the invention is to provide an RFID-label issuing apparatus that can easily distinguish RFID labels having a defective RFID tag each, from RFID labels having a flawless RFID tag each.

According to an aspect of this invention, there is provided an RFID-label issuing apparatus designed to issue RFID labels each having an RFID tag and a data-print surface. The apparatus comprises an RFID reader-writer, a printing unit, a level determining unit, and a printer control unit. The RFID reader-writer performs radio communication with the RFID tag of each RFID label, thereby writing and reading data into and from the RFID tag. The printing unit prints label data on the data-print surface of the RFID label. The level determining unit determines whether the radio output level of any RFID tag that has successfully undergone radio communication with the RFID reader-writer is equal to or higher than a reference level. The printer control unit controls the printing unit, causing the printing unit print to print label data on the data-print surface of any RFID label that has an RFID tag whose radio output level has been determined to be equal or higher than reference level by the level determining unit.

The invention can be more fully understood from the following detailed description when taken in conjunction with the accompanying drawings, in which:
FIG. 1 is a schematic diagram of an RFID label sheet for use in an embodiment of the present invention;
FIG. 2 is a magnified sectional view of the RFID label sheet, taken along line A-A shown in FIG. 1;
FIG. 3 is a block diagram showing the overall configuration of an RFID-label issuing apparatus that is an embodiment of this invention;
FIG. 4 is a block diagram showing the major components of the RFID reader-writer provided in the embodiment;
FIG. 5 is a flowchart explaining the RFID-label issuing sequence the printer control section performs in the embodiment;
FIG. 6 is a diagram showing an example of data printed on a normal label issued by the embodiment;
FIG. 7 is a diagram showing an example of a message printed on a tag-warning label issued by the embodiment;
FIG. 8 is a diagram showing an example of a defective label issued by the embodiment; and
FIG. 9 is a diagram showing another example of a warning note printed on a tag-warning label issued by the embodiment.

One of the best embodiments of the present invention will be described, with reference to the accompanying drawings.

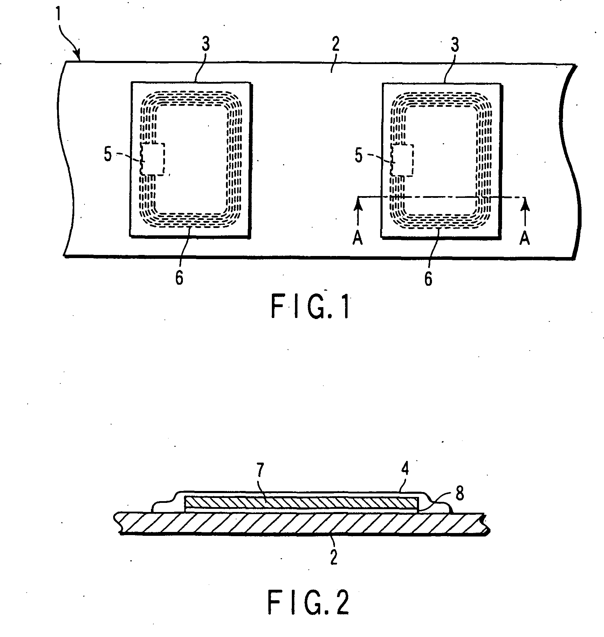

First, an RFID label sheet 1 for use in this embodiment will be described, with reference to FIGS. 1 and 2.

As FIG. 1 shows, the RFID label sheet 1 is composed of a belt-shaped base 2 and a plurality of RFID labels 3 bonded to one surface of the base 2. The RFID labels 3 are arranged in a row in the lengthwise direction of the base 2 and can be peeled off.

FIG. 2 is a sectional view taken along line A-A shown in FIG. 1. As seen from FIG. 2, each RFID label 3 is composed of a label sheet 4 and an RFID tag 7. The upper surface of the label sheet 4 is a data-print surface. The RFID tag 7 is sealed in a gap between the base 2 and the lower surface of the label sheet 4. The RFID tag 7 is composed of a film-like medium, an IC chip 5, and an antenna 6. The IC chip 5 and the antenna 6 are mounted on the film-like medium. The label sheet 4 is bonded to the base 2 with adhesive 8.

The IC chip 5 of the RFID tag 7 comprises a power-generating unit, a demodulation unit, a modulation unit, a memory unit, and a control unit. The control unit controls the other component units of the IC chip 5. The power-generating unit rectifies and stabilizes the signal the antenna 6 has received in the form of a radio wave, thus generating electric power. The power is supplied to the other components of the IC chip 5. The demodulation unit demodulates the signal, which is supplied to the control unit. The modulation unit modulates any data output from the control unit. The data modulated is supplied to the antenna 6, which transmits the data. The control unit writes data demodulated by the demodulation unit, into the memory unit. The control unit also reads data from the memory unit and supplies this data to the modulation unit.

The memory unit is composed of a setting area and a user area. An ID code is has been written into the setting area. The ID code is a specific code assigned to the RFID tag 7, identifying the RFID tag 7. The ID code cannot be rewritten. Any data can be written in the user area. Data written in the user area can be rewritten.

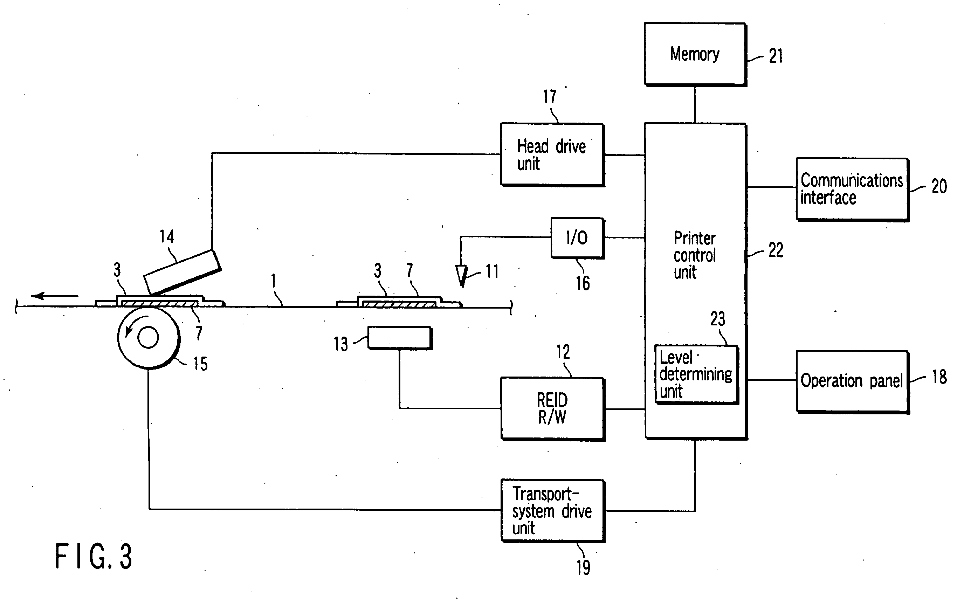

An RFID-label issuing apparatus that uses the RFID label sheet 1 described above will be described, with reference to FIGS. 3 to 5. The apparatus writes tag data into the RFID tags 7 of the RFID labels 3 being transported one by one, without contacting the RFID labels 3 by means of radio communication. The apparatus also prints data on each RFID label 3. More precisely, it prints label-print data on the print surface of the label sheet 4 of the RFID label 3.

FIG. 3 is a block diagram showing the overall configuration of an RFID-label issuing apparatus. The RFID label sheet 1 is set, in the form of a roll, in the label holder provided in the RFID-label issuing apparatus. In the RFID-label issuing apparatus, the distal part of the RFID label sheet 1 is fed from the label holder and guided to a peeling unit along a transport path. At the peeling unit, the RFID labels 3 are peeled, one after another, from the base 2. The RRID labels 3 thus peeled are ejected from the label issuing port of the apparatus. The base 2, from which the RFID labels 3 have been removed, is taken up by a take-up roller. The transport path, the label holder, the label issuing port, and the take-up roller are not illustrated in FIG. 3.

A label sensor 11, the antenna 13 of an RFID reader-writer 12, and a print head 14 are arranged on the transport path. These components are arranged in the order mentioned, from the label holder toward the peeling unit, which are located upstream and downstream with respect to the direction (arrow B in FIG. 3) of transporting the RFID label sheet 1.

The label sensor 11 and the print head 14 are located above the transport path. On the other hand, the antenna 13 is located below the transport path. A platen roller 15 is provided, opposing the print head 14 across the transport path. The antenna 13 may be provided above the transport path.

The label sensor 11 detects each RFID label 3 on the RFID label sheet 1 fed from the label holder, when the RFID label 3 is moved to it. On detecting the leading edge of an RFID label 3 by using, for example, an optical sensor technique, the label sensor 11 outputs a detection signal indicating that the RFID label 3 has been detected. The detection signal is supplied via an I/O port 16 to a printer control unit 22, which will be described later.

The antenna 13, which is located at a short distance from the conveyor surface of the transport path, transmits a radio wave or an electromagnetic wave, under the control of the RFID reader-writer 12. On receiving the radio wave, the RFID tag 7 transmits a response wave. The antenna 13 receives the response wave. The antenna 13 has high directivity with respect to the conveyor surface of the transport path that lies immediately above the antenna 13 (or immediately below the antenna 13 in the case where the antenna 13 is located above the transport path).

The RFID reader-writer 12 can write and read tag data into and from any RFID tag 7 that lies in a region which the radio wave emitted from the antenna 13 can reach. The RFID reader-writer 12 will be described later in detail.

When driven by a head drive unit 17, the print head 14 prints various visible data items on the surface of the RFID label 3 lying above the platen roller 15, more precisely on the print surface of the label sheet 4. The print head 14 is, for example, a thermal head. The print head 14 and the head drive unit 17 constitute the label printing unit of the RFID-label issuing apparatus. Note that an ink ribbon may be interposed between the print head 14 and the RFID label 3.

The RFID-label issuing apparatus comprises an operation panel 18, a transport-system drive unit 19, a communications interface 20, a memory 21, and a printer control unit 22. The operation panel 18 has various keys and a display unit. The keys serve as a user interface. The display unit works as an alarm means.

The transport-system drive unit 19 functions as a drive for the RFID-label sheet transporting system. The RFID-label sheet transporting system is constituted by the platen roller 15, the take-up roller, and the like. The RFID label sheet 1 is transported along the transport path by the transport-system drive unit 19.

The communications interface 20 is connected to a host apparatus, such as a personal computer, by a communications line. The host apparatus issues an RFID-label issuing job. The RFID-label issuing job includes the tag data and label-print data. The tag data is to be written into the RFID tag 7 of an RFID label 3. The label-print data is, for example, characters that are to be printed on the print surface of the RFID label 3. The RFID-label issuing job issued from the host apparatus is supplied to the communications interface 20. Thus, the RFID-label issuing apparatus acquires the RFID-label issuing job.

In the RFID-label issuing apparatus, the job is stored into the memory 21. The memory 21 has an area for storing a job, an area in which for temporarily storing the tag data edited on the basis of the job, and an area for developing the image of the label-print data.

The printer control unit 22 is composed mainly of a CPU. The printer control unit 22 has a level determining unit 23 that is configured to determine whether the radio output level of the RFID tag 7 is equal or higher than reference level.

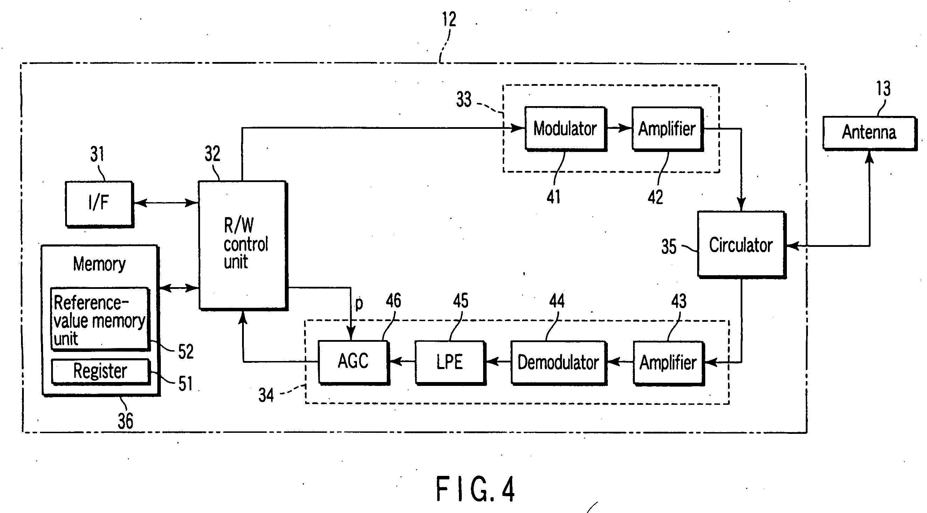

FIG. 4 is a block diagram showing the major components of the RFID reader-writer 12. The RFID reader-writer 12 is composed of an interface 31, a reader-writer control unit 32, a transmission process unit 33, a reception process unit 34, a circulator 35, a memory 36, and the like. The interface 31 is connected to the printer control unit 22.

The transmission process unit 33 is composed of a modulator 41 and an amplifier 42. The modulator 41 modulates a prescribed carrier wave with the analog sending data signal output from the reader-writer control unit 32. The amplifier 42 amplifies the signal the modulator 41 has modulated. The signal amplified by the amplifier 42 is supplied via the circulator 35 to the antenna 13. The antenna 13 radiates the signal in the form of a radio wave.

The circulator 35 has two functions to perform. One function is to output the signal input from the transmission process unit 33, to the antenna 13. The other function is to output the signal input from the antennal 13, to the reception process unit 34. The antenna 13 receives a radio wave from any RFID tag 7 that lies in the communication region covered by the antenna 13. The antenna 13 then supplies a signal corresponding to the radio wave, to the circulator 35.

The reception process unit 34 is composed of an amplifier 43, a demodulator 44, a low-pass filter (LPF) 45, and an automatic gain control (AGC) circuit 46. The amplifier 43 amplifies a signal input via the circulator 35. The demodulator 44 filters out the carrier component of the analog data signal amplified by the amplifier 43. Then, the demodulator 44 demodulates the analog received data signal. The LPF 45 allows the passage of that part of the data signal demodulated by the demodulator 44, which is of a predetermined low frequency band. The AGC circuit 46 can controls the gain (amplification factor) so that the intensity level of the data signal received through the LPF 45. The reader-writer control unit 32 receives the received data signal that the AGC circuit 46 has adjusted to an appropriate level.

The reader-writer control unit 32 has three functions to perform. One function is to generate sending data. Another function is to convert the received data. The other function is to change the gain of the AGC circuit 46. That is, the reader-writer control unit 32 generates a sending data signal in response to a command supplied from the printer control unit 22 via the interface 31. The sending data signal is output to the transmission process unit 33.

The reader-writer control unit 32 receives a data signal from the reception process unit 34 and converts the received data signal to data that the printer control unit 22 can recognize. This data is output to the printer control unit 22 through the interface 31.

The reader-writer control unit 32 produces an AGC parameter p that will adjust the intensity level of the data signal received from the ACG circuit 46 to an appropriate level. The AGC parameter p is supplied to the AGC circuit 46. The gain of the AGC circuit 46 changes in accordance with the AGC parameter p. Having the gain thus changed, the AGC circuit 46 adjusts the intensity level of the data signal received.

The memory 36 has a ROM area and a RAM area. In the ROM area, data only to be read out is stored. Into and from the RAM area, data can be written and read. In the ROM area, programs for controlling the reader-writer control unit 32 and similar data are stored. In the RAM area, a register 51 and a reference-value memory unit 52 are provided. The register 51 has a first-in, first-out function. AGC parameters p are written into the register 51 in the order they have been supplied from the reader-writer control unit 32 to the AGC circuit 46.

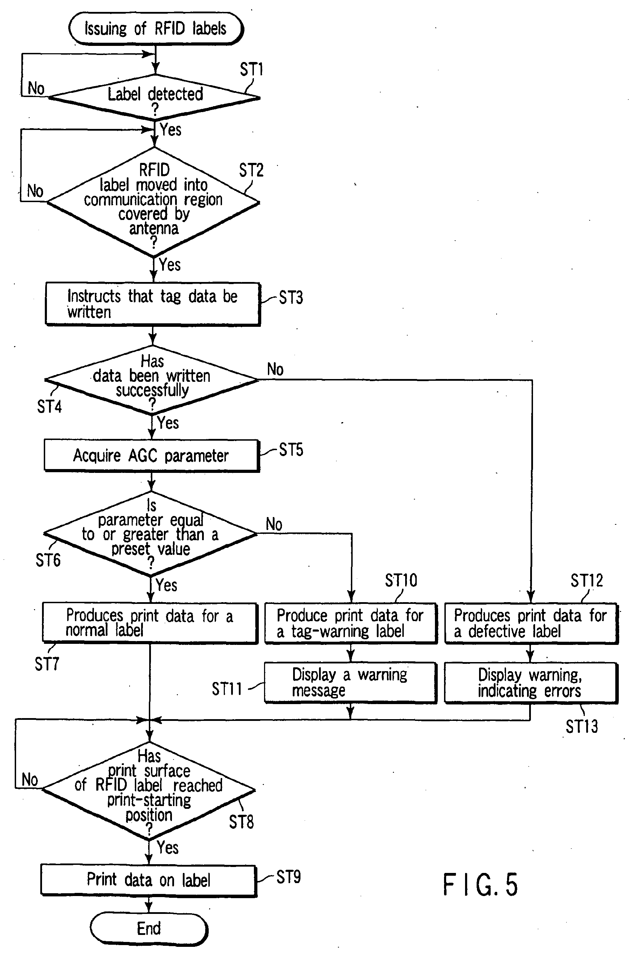

FIG. 5 is a flowchart explaining the RFID-label issuing sequence the printer control section 22 performs. The RFID-label issuing apparatus issues an RFID label 3 as the printer control section 22 performs this RFID-label issuing sequence.

When an RFID-label issuing job is written into the memory 21, the printer control section 22 activates this job. When the job is activated, the printer control section 22 determines, in Step ST1, whether the label sensor 11 has detected the RFID label 3. If the RFID label 3 has not been detected, the printer control section 22 controls the transport-system drive unit 19. Thus controlled, the transport-system drive unit 19 transports the RFID label sheet 1 at a predetermined pitch.

If the RFID label 3 has been detected, the printer control section 22 determines that the RFID label 3 should be issued. In Step ST2, the printer control section 22 remains in a standby state until the RFID tag 7 of the RFID label 3 is moved into the communication region covered by the antenna 13. The time for which the printer control section 22 remains in the standby state is determined from the distance between the label sensor 11 and the antenna 13 and the speed with which the RFID label sheet 1 is moved. Upon lapse of this time, the printer control section 22 produces a tag-write command and outputs the same to the RFID reader-writer 12, in Step ST3. The tag-write command instructs that the tag data edited on the basis of the job being performed should be written.

On receiving the tag-write command, the RFID reader-writer 12 begins to operate. First, the reader-writer control unit 32 generates a sending data signal. The sending data signal is modulated and amplified in the transmission process unit 33. The sending data signal is supplied via the circulator 35 to the antenna 13. The antenna 13 radiates a radio wave that corresponds to the sending data signal.

At this time, the RFID label 3 to be issued has already been transported into the communication region covered by the antenna 13. The RFID tag 7 sealed in this label 3 therefore receives the radio wave transmitted from the antenna 13. The RFID tag 7, which has received the radio wave, is activated, and tag data is written into the memory unit of the RFID tag 7. The RFID tag 7 transmits a response radio wave indicating that the tag data has been written successfully.

The antenna 13 receives the response radio wave indicating the successful data writing and outputs a signal corresponding to the radio wave it has received. This signal is supplied to the RFID reader-writer 12. In the RFID reader-writer 12, the reception process unit 34 amplifies the signal and demodulates the same, generating a data signal that indicates the successful data writing. From the data signal, a component of a predetermined low frequency band is extracted. The data signal thus processed is output through the AGC circuit 46 to the reader-writer control unit 32.

The reader-writer control unit 32 produces an AGC parameter p that will adjust the intensity level of the data signal received from the ACG circuit 46 may become appropriate. The AGC parameter p is written into the register 51 and supplied to the to the AGC circuit 46. Thus, the data signal, which indicates the successful data writing and which has been adjusted to an appropriate level by the AGC circuit 46, is input to the reader-writer control unit 32. This data signal is converted to data that can be recognized in the printer control section 22. The data thus converted is output to the printer control section 22 through the interface 31.

After transmitting the tag-write command to the RFID reader-writer 12, the printer control section 22 starts waiting for response data coming from the RFID reader-writer 12, in Step ST4. On receiving the data indicating the successful data writing, the printer control section 22 reads the first AGC parameter p from the register 51 provided in the RFID reader-writer 12, in Step ST5. The printer control section 22 determines, in Step ST6, whether the first AGC parameter p is equal to or greater than a predetermined value.

This AGC parameter p has been given to the AGC circuit 46, in response to the tag-write command transmitted in Step ST3. That is, the AGC parameter p is supplied to the AGC circuit 46 in response to that command, in order to adjust, to an appropriate value, the intensity level of the response data signal supplied from the RFID tag 7, into which tag data has been written.

In the RFID-label issuing apparatus, the antenna 13 of the RFID reader-writer 12 is located close to the conveyor surface of the transport path in which the RFID label sheet 1 is transported. The antenna 13 has high directivity with respect to the conveyor surface of the transport path. Therefore, any signal received from any RFID tag 7 that has a normal radio output level will likely have a high intensity level and will be easily distorted.

In view of this, the AGC circuit 46 is provided in the reception process unit 34 of the RFID reader-writer 12. The AGC circuit 46 lowers the intensity level of the received signal to an appropriate level. In other words, the AGC parameter p increases in value for the signal received from any RFID tag 7 that has a normal radio output level. However, some of the RFID tags 7 mounted on the RFID label sheet 1 have a radio output level lower than the normal value. For the signal received from such a defective RFID tag 7, the AGC parameter p is small in proportion to a decrease in radio output level.

This is why a value appropriate for the AGC parameter p is stored as threshold value in the memory 21. The value appropriate is one that can lower, to an appropriate value, the intensity level of a signal received from any RFID tag 7 that has a normal radio output level. The term "normal radio output level" is the lowest radio output level any RFID tag 7 can have to cause no problem in practice.

The printer control section 22 constitutes a level determining unit 23 determines whether the radio output level of the RFID tag 7 that has successfully communicated with the RFID reader-writer 12 is equal or higher than reference level.

In Step ST6, the AGC parameter p may be found to be equal to or greater than the threshold value. In this case, the printer control section 22 produces print data for a normal label, in Step ST7. That is, the printer control section 22 develops the image if the label data in the memory 21 in accordance with the RFID-label issuing job being executed.

Thereafter, in Step ST8, the printer control section 22 remains in the standby state until the print surface of the RFID label 3 reaches the print-starting position of the printing unit. The time for which the printer control section 22 remains in the standby state is determined from the distance between the label sensor 11 and the antenna 13 and the speed with which the RFID label sheet 1 is transported. Upon lapse of this time, the printer control section 22 controls the head drive unit 17 in Step ST9, controlling the drive unit 17, which drives the print head 14. The image represented by the label data is thereby printed on the print surface of the RFID label 3 to be issued.

In Step ST6, the AGC parameter p may be found to be less than the threshold value. In this case, the printer control section 22 produces print data for a tag-warning label, in Step ST10. That is, the printer control section 22 develops, in the memory 21, not only the image represented by the label data in the memory 21 in accordance with the RFID-label issuing job being executed, but also the image of a preset warming message. Further, in Step ST11, the printer control section 22 causes the display unit of the operation panel 18 to display a warning message, informing the user that a defective RFID label will be issued.

Subsequently, the printer control section 22 performs Steps ST8 and ST9, both described above. That is, the printer control section 22 remains in the standby state for the time required for the print surface of the RFID label 3 to reach the print-starting position. Upon lapse of this time, the printer control section 22 controls the head drive unit 17, which drives the print head 14. The image represented by the warning-label print data is thereby printed on the print surface of the RFID label 3 to be issued.

If the tag data for the RFID tag 7 cannot be written in Step ST3, no response data indicating the successful data writing can be received in Step ST4. In this case, the printer control section 22 produces print data for a defective label in Step ST12. That is, it develops the made of a preset special pattern in the memory 21. In Step ST13, the printer control section 22 causes the display unit of the operation panel 18 to display a warning that informs the user that a defective RFID label will be issued.

Then, the printer control section 22 performs Steps ST8 and ST9, both described above. That is, the printer control section 22 remains in the standby state for the time required for the print surface of the RFID label 3 to reach the print-starting position. Upon lapse of this time, the printer control section 22 controls the head drive unit 17, which drives the print head 14. The image represented by the warning-label print data is thereby printed on the print surface of the RFID label 3 to be issued.

Thus, the printing unit prints normal-label print data, warning-label print data or defective print data on the print surface of the RFID label 3. The RFID label 3 printed with either print data is guided to the peeling unit. The peeling unit peels the RFID label 3 from the base 2. The RFID label 3, thus peeled, is ejected from the label issuing port.

Thereafter, the printer control section 22 determines whether the next RFID-label issuing job has been written into the memory 21. If the next RFID-label issuing job has not been written, the section 22 controls the transport-system drive unit 19, terminating the transport of the RFID label sheet 1.

The RFID-label issuing job activated may instruct that a plurality of labels be issued. In this case, the printer control section 22 repeats the RFID-label issuing process as many times as the RFID labels that should be issued.

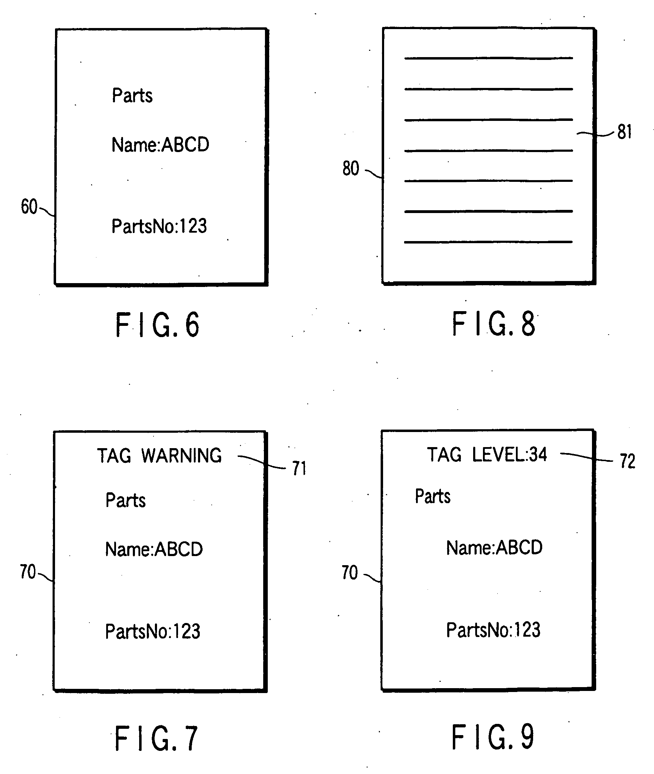

As described above, whether the radio output level of any RFID tag that has successfully communicated with the RFID reader-writer 12 is equal to or higher than the reference level is determined in the present embodiment. If the radio output level is found equal to or higher than the reference level, normal-label print data is printed on the RFID label 3 having the RFID tag 7 found to have a radio output level equal to or higher than the reference level. This RFID label 3 is issued as a normal label 60. FIG. 6 shows an example of the normal label 60.

On the print surface of any RFID label 3 that has an RFID tag 7 whose radio output level is found lower than the reference level, a warning message 71 is printed, in addition to the normal-label data. This RFID label 3 is issued as a tag-warning label 70. FIG. 7 shows an example of a tag-warning label 70. As shown in FIG. 7, "TAG WARNING" is printed as warning message 71.

On the print surface of any RFID label 3 whose RFID tag 7 has failed to store tag data, a special pattern 81 is printed. Such an RFID label 3 is issued as a defective label 80. FIG. 8 shows an example of the defective label 80. This example has a special pattern 81 printed on it, which consists of several lines.

In the present embodiment, any RFID label 3 issued as a normal label 60 has an RFID tag 7 whose radio output level is equal to or higher than the reference level. The user can therefore easily select RFID labels 3 each having an RFID tag 7 that has a practically sufficient radio output level.

Any RFID label 3 that has successfully stored tag data but has a radio output level lower than the reference level is issued as a tag-warning label 70. As described above, warning message 71 is printed on the tag-warning label 70. The user can therefore visually distinguish a normal label 60 and a tag-warning label 70 from each other.

Tag data has been normally written into each tag-warning label 70, though the label 70 has a radio output level lower than the reference level. Hence, the tag-warning label 70 can raise no practical problems as long as it lies near the antenna of the RFID reader-writer when the RFID reader-writer writes tag data into the RFID tag 7. The tag-warning label 70 need not be discarded and can be used in such a condition, in spite of its insufficient radio output level. This can save the cost.

The present invention is not limited to the embodiment described above. The components of the embodiment can be modified in various manners in reducing the invention to practice, without departing from the sprit or scope of the invention.

In the embodiment described above, a particular warning message 71 is printed on each tag-warning label 70. Instead, a special pattern may be printed on the tag-warning label 70, as on the defective label 80, in another embodiment of this invention. In this case, too, the user can visually distinguish the normal label 60 and the tag-warning label 70.

In the embodiment described above, the AGC parameter is compared with a fixed threshold value. Nonetheless, the AGC parameter may be changed to a desirable value in still another embodiment of the invention. To change the threshold value, the user may operate the host apparatus. Alternatively, the user may operate the operation panel 18, thereby to change the threshold value as desired.

Every time the condition in which the RFID labels 3 are used changes, the user may change the threshold value to one fit to the new condition. Then, the RFID tag 7 provided in each RFID label 3 will reliably attain an appropriate radio output level.

The warning message to print on a tag-warning label 70 is not limited to the warning message 71 shown in FIG. 7. Instead, as shown in FIG. 9, visible information 72 presenting the value of the AGC parameter may be printed on a tag-warning label 70 in an RFID-label issuing apparatus according to another embodiment. The value of the AGC parameter is a reference showing the radio output level of the RFID tag 7. Seeing the AGC parameter printed, the user can easily decide whether to use or discard the tag-warning label 70.

Moreover, an RFID-label issuing apparatus according to still another embodiment prints visible information 72 presenting the value of the AGC parameter on a normal label 60. Seeing the information 72 printed on the normal label 60, the user can readily know the performance of the RFID tag 7.

The alarm for any tag-warning label 70 or a defective label 80 is not limited to the visible one. For example, a buzzer may generate an alarm every time a tag-warning label 70 or a defective label 80 is issued. Further, the alarm for a tag-warning label 70 may be different from the alarm for a defective label 80. In this case, the user can distinguish the tag-warning label 70 and the defective label 80 from each other, either visually or aurally.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An RFID-label issuing apparatus composed of an RFID reader-writer (12) configured to perform radio communication with the RFID tag (5) of an RFID label (3), thereby to write and read data into and from the RFID tag (5), and a printing unit (14, 15) configured to print label data on the data-print surface of the RFID label, **characterized by** comprising:
a level determining unit (23) configured to determine whether the radio output level of the RFID tag (7) of the RFID label, which has successfully communicated with the RFID reader-writer (12), is equal to or higher than a reference level; and
a printer control unit (22) configured to control the printing unit (14, 15), causing the printing unit (14, 15) to print label data on the data-print surface of any RFID label (3) that has an RFID tag (7) whose radio output level has been determined to be equal or higher than reference level by the level determining unit (23).

2. The apparatus according to claim 1,
**characterized in that** the level determining unit (23) determines the radio output level of the RFID tag (7) on the basis of an automatic gain-control parameter that automatically adjusts the intensity of a signal received from the RFID tag (7) to an appropriate level.

3. The apparatus according to claim 2,
**characterized in that** the reference level used by the level determining unit (23) is able to be changed.

4. The apparatus according to claim 1,
**characterized by** further comprising an alarm unit (18) which is configured to generate an alarm when the level determining unit (23) determines that the radio output level of the RFID tag (7) is lower than the reference level.

5. The apparatus according to claim 1,
**characterized by** further comprising a warning-printing control unit (22) which is configured to control the printing control unit (14, 15), causing the printing unit (14, 15) to print prescribed warning data on the data-print surface of any RFID label (3) that has an RFID tag (7) whose radio output level has been determined to be lower than reference level by the level determining unit (23).

6. The apparatus according to claim 5,
**characterized in that** the warning-printing control unit (22) causes the printing unit (14, 15) to print, on the data-print surface of.the RFID label (3), warning data that is a combination of the label data and a prescribed warning message.

7. The apparatus according to claim 5,
**characterized in that** the warning-printing control unit (22) causes the printing unit (14, 15) to print, on the data-print surface of the RFID label (3), warning data that is a special pattern different from the label data.

8. The apparatus according to claim 5,
**characterized in that** the level determining unit (23) determines the radio output level of the RFID tag (7) on the basis of an automatic gain-control parameter for automatically adjusting the intensity of a signal received from the RFID tag (7); and the warning-printing control unit causes the printing unit (14, 15) to print, on the data-print surface of the RFID label (3), warning data that is a combination of the label data and the automatic gain-control parameter.

## Patentansprüche

1. Eine RFID-Etikettenausgabevorrichtung enthaltend einen RFID Leser-Schreiber (12), der konfiguriert ist zum Durchführen einer Funkkommunikation mit einer RFID Marke (5) eines RFID Etiketts (3), um **dadurch** Daten in die RFID Marke (5) zu schreiben und von der RFID Marke (5) zu lesen, und eine Ausdruckeinheit (14, 15) die konfiguriert ist zum Ausdrucken von Etikettendaten auf die Datendruckoberfläche des RFID Etiketts, **gekennzeichnet durch**
eine Pegelbestimmungseinheit (23), die konfiguriert ist zum Bestimmen, ob der Funkausgangssignalpegel der RFID Marke (7) des RFID Etiketts, die erfolgreich mit dem RFID Leser-Schreiber (12) kommuniziert hat, gleich oder größer als ein Referenzpegel ist; und
eine Druckersteuerungseinheit (22), die konfiguriert ist zum Steuern der Ausdruckeinheit (14, 15), wodurch die Ausdruckeinheit (14, 15) veranlasst wird, Etikettendaten auf die Datendruckoberfläche irgendeines RFID Etiketts (3) auszudrucken, das eine RFID Marke (7) aufweist, deren Funkausgangssignalpegel als gleich oder größer als der Referenzpegel **durch** die Pegelbestimmungseinheit (23) bestimmt worden ist.

2. Vorrichtung nach Anspruch 1, **dadurch gekennzeichnet, dass** die Pegelbestimmungseinheit (23) den Funkausgangssignalpegel der RFID Marke (7) basierend auf einem Parameter für eine automatische Gewinnsteuerung bestimmt, der automatisch die Intensität eines Signals, das von der RFID Marke (7) empfangen wird, auf einen geeigneten Pegel einstellt.

3. Vorrichtung nach Anspruch 2, **dadurch gekennzeichnet, dass** der Referenzpegel, der von der Pegelbestimmungseinheit (23) verwendet wird, geändert werden kann.

4. Vorrichtung nach Anspruch 1, **gekennzeichnet durch** ferner enthaltend eine Alarmeinheit (18), die konfiguriert ist zum Erzeugen eines Alarms, wenn die Pegelbestimmungseinheit (23) bestimmt, dass der Funkausgangssignalpegel der RFID Marke (7) kleiner als der Referenzpegel ist.

5. Vorrichtung nach Anspruch 1, **gekennzeichnet durch** ferner enthaltend eine Warnausdrucksteuerungseinheit (22), die konfiguriert ist zum Steuern der Ausdrucksteuerungseinheit (14, 15), wodurch die Ausdruckeinheit (14, 15) veranlasst wird, vorgeschriebene Warndaten auf die Datendruckoberfläche irgendeines RFID Etiketts (3) zu drucken, das eine RFID Marke (7) aufweist, deren Funkausgangssignalpegel als kleiner als der Referenzpegel **durch** die Pegelbestimmungseinheit (23) bestimmt worden ist.

6. Vorrichtung nach Anspruch 5, **dadurch gekennzeichnet, dass** die Warnausdrucksteuerungseinheit (22) die Druckeinheit (14, 15) veranlasst, Warndaten, die eine Kombination aus Etikettdaten und einer vorgeschriebenen Warnnachricht sind, auf die Datendruckoberfläche des RFID Etiketts (3) zu drucken.

7. Vorrichtung nach Anspruch 5, **dadurch gekennzeichnet, dass** die Warndrucksteuereinheit (22) die Ausdruckeinheit (14, 15) veranlasst, Warndaten, die ein spezielles Muster sind, das von Etikettdaten verschieden ist, auf die Datendruckoberfläche des RFID Etiketts (3) auszudrucken.

8. Vorrichtung nach Anspruch 5, **dadurch gekennzeichnet, dass** die Pegelbestimmungseinheit (23) den Funkausgangssignalpegel der RFID Marke (7) basierend auf einen Parameter für eine automatische Gewinnsteuerung bestimmt zum automatischen Einstellen der Intensität eines Signals, das von der RFID Marke (7) empfangen wird; und die Warnausdrucksteuerungseinheit die Ausdruckeinheit (14,15) veranlasst zum Drucken von Warndaten, die eine Kombination der Etikettdaten und des Parameters für die automatische Gewinnsteuerung sind, auf die Datendruckoberfläche des RFID Etiketts (3).

## Revendications

1. Appareil de fourniture d'étiquette RFID, composé d'un dispositif de lecture/écriture RFID (12) configuré pour exécuter une communication radio avec la puce RFID (5) d'une étiquette RFID (3) pour ainsi écrire et lire des données sur et depuis la puce RFID (5), et une unité d'impression (14, 15) configurée pour imprimer des données d'étiquette sur la surface d'impression de données de l'étiquette RFID, **caractérisé en ce qu'**il comprend :
une unité de détermination de niveau (23) configurée pour déterminer si le niveau de sortie radio de la puce RFID (7) de l'étiquette RFID, qui a communiqué avec succès avec le dispositif de lecture/écriture RFID (12), est égal ou supérieur à un niveau de référence ; et
une unité de commande d'impression (22) configurée pour commander l'unité d'impression (14, 15) et amener l'unité d'impression (14, 15) à imprimer des données sur la surface d'impression de données d'une quelconque étiquette RFID (3) qui possède une puce RFID (7) dont le niveau de sortie radio a été déterminé comme étant égal ou supérieur à un niveau de référence par l'unité de détermination de niveau (23).

2. Appareil selon la revendication 1,
**caractérisé en ce que** l'unité de détermination de niveau (23) détermine le niveau de sortie radio de la puce RFID (7) en se basant sur un paramètre de contrôle automatique de gain qui ajuste automatiquement l'intensité d'un signal reçu depuis la puce RFID (7) à un niveau approprié.

3. Appareil selon la revendication 2,
**caractérisé en ce que** le niveau de référence utilisé par l'unité de détermination de niveau (23) est susceptible d'être changé.

4. Appareil selon la revendication 1,
**caractérisé en ce qu'**il comprend en outre une unité d'alarme (18) qui est configurée pour générer une alarme quand l'unité de détermination de niveau (23) détermine que le niveau de sortie radio de la puce RFID (7) est inférieur au niveau de référence.

5. Appareil selon la revendication 1,
**caractérisé en ce qu'**il comprend en outre une unité de commande d'impression/avertissement (22) qui est configurée pour commander l'unité de commande d'impression (14, 15) et amener l'unité d'impression (14, 15) à imprimer des données d'avertissement prescrites sur la surface d'impression de données d'une quelconque étiquette RFID (3) qui possède une puce RFID (7) dont le niveau de sortie radio a été déterminé comme étant inférieur au niveau de référence par l'unité de détermination de niveau (23).

6. Appareil selon la revendication 5,
**caractérisé en ce que** l'unité de commande d'impression/avertissement (22) amène l'unité d'impression (14, 15) à imprimer, sur la surface d'impression de données de l'étiquette RFID (3), des données d'avertissement qui sont une combinaison des données d'étiquette et d'un message d'avertissement prescrit.

7. Appareil selon la revendication 5,
**caractérisé en ce que** l'unité de commande d'impression/avertissement (22) amène l'unité d'impression (14, 15) à imprimer, sur la surface d'impression de données de l'étiquette RFID (3), des données d'avertissement qui ont un motif spécial différent des données d'étiquette.

8. Appareil selon la revendication 5,
**caractérisé en ce que** l'unité de détermination de niveau (23) détermine le niveau de sortie radio de la puce RFID (7) en se basant sur un paramètre de contrôle de gain automatique pour ajuster automatiquement l'intensité d'un signal reçu depuis la puce RFID (7) ; et l'unité de commande d'impression/avertissement amène l'unité d'impression (14, 15) à imprimer, sur la surface d'impression de données de l'étiquette RFID (3), des données d'avertissement qui sont une combinaison des données d'étiquette et du paramètre de contrôle de gain automatique.
